# EUROPÄISCHE PATENTSCHRIFT

(11) **EP 1 152 923 B1**
(45) Veröffentlichungstag und Bekanntmachung des Hinweises auf die Patenterteilung: **22.09.2004**
(21) Anmeldenummer: 00918681.8
(22) Anmeldetag: 28.02.2000
(51) Int. Cl.: B60R 16/02, B60Q 5/00

(54) **LENKRAD MIT EINEM SCHALTELEMENT, INSBESONDERE FÜR DIE HORNAUSLÖSUNG**
STEERING WHEEL WITH A SWITCHING ELEMENT, ESPECIALLY FOR HONKING THE HORN
VOLANT DOTE D'UN ELEMENT DE COMMUTATION, EN PARTICULIER POUR LE DECLENCHEMENT DU KLAXON

(30) Priorität: 26.02.1999 DE 19908385
(43) Veröffentlichungstag der Anmeldung: 14.11.2001
(73) Patentinhaber: Takata-Petri AG, 63743 Aschaffenburg (DE)
(72) Erfinder: BONN, Helmut, D-63808 Haibach (DE)
(74) Vertreter: Baumgärtel, Gunnar, Dr.
(86) Internationale Anmeldenummer: PCT/DE2000/000673
(87) Internationale Veröffentlichungsnummer: WO 2000/050264

(56) Entgegenhaltungen:
- EP-A- 0 785 107
- FR-A- 1 110 551
- US-A- 4 575 117
- US-A- 5 062 661
- US-A- 5 767 466

## Beschreibung

Die Erfindung betrifft ein Lenkrad mit einem Schaltelement, insbesondere für die Hornauslösung, nach dem Oberbegriff des Anspruchs 1.

Das Horn eines Kraftfahrzeuges soll es dem Fahrer eines Kraftfahrzeuges insbesondere in kritischen Situationen ermöglichen, ein Warnsignal abzugeben. Üblicherweise wird das Hornsignal durch einen Druck auf das Zentrum des Lenkrades des Fahrzeuges ausgelöst. Dabei wird zumindest ein Teilbereich einer Abdeckung in Richtung auf das Lenkrad bewegt und so ein mechanisches Schaltelement kurzgeschlossen.

Durch die Anordnung einer Airbageinheit im Lenkrad, die dem Schutz des Fahrers eines Kraftfahrzeuges im Crash-Fall dient, ergeben sich Probleme hinsichtlich der Anordnung der Kontakte für die Hornauslösung.

Zur Integration des Schaltelementes zur Auslösung des Hupensignals wird in der DE 197 32 022 vorgeschlagen, den Hupenschalter durch einen Kontakt, der auf dem oberen Rand eines den Airbag aufnehmenden Containers angeordnet ist, und einen Gegenkontakt, der auf der Unterseite eines auf den Containerrand gerichteten und von einer Airbag-Abdekkung abragenden Steges angeordnet ist, zu bilden. Die Abdeckung wird hierbei zusätzlich über den Steg am oberen Rand des Containers mit Druckfedern abgestützt.

Allerdings wird zunehmend das Hupenrelais nicht mehr direkt geschaltet. Hierdurch wird ermöglicht, geringere Schaltströme zu verwenden, was zu einer verbesserten elektromagnetischen Verträglichkeit führt. Bei geringen Schaltströmen sind die beim Schließen der metallischen Kontakte des Schaltelementes auftretenden Spannungsspitzen störend. Die Spannungsspitzen führen dazu, daß ein zuverlässiges Auslösen der durch das Schaltelement auslösbaren elektrischen Funktionskomponente, z.B. eines Signalhornes, nicht immer gewährleistet ist.

Zur Lösung dieses Probleme wurde die Verwendung von Folien aus piezoelektrischem Material für den Kontakt der Hornauslösung vorgeschlagen. Diese Folie läßt sich zwischen Abdeckung und Airbageinheit einarbeiten und erlaubt eine Hornauslösung in gewohnter Weise durch axiale Betätigung des zentralen Bereichs der Abdeckung. Beispiele für diese Lösung finden sich unter anderem in der EP 534 694 B1, US-A 5,499,841, DE 43 29 120 A1 und EP 568 764 A1. Nachteilig an dieser Lösung ist jedoch das relativ teure piezoelektrische Material für die Folien.

Aus der US 5,062,661 ist eine Airbagabdeckung mit einem in dieser angeordneten Schaltelement, gemäß dem Oberbegriff des Anspruchs 1, bekannt. Die Airbagabdekkung besteht aus einem flexiblen Diaphragma durch dessen Betätigung die unter dem Diaphragma angeordneten Kontaktelemente zur Hornauslösung in elektrischen Kontakt gebracht werden. Dabei kann in einer Ausführungsform ein Kontaktelement auch aus einem elektrisch leitfähigen thermoplastischen Kunststoff gebildet werden, während das andere Kontaktelement aus Metall besteht.

Alternativ kann ein gewöhnliches elektrisches Schaltelement mit einer elektronischen Schaltung verbunden werden, die die Spannungsspitzen erkennt und korrigiert. Auch hier wird jedoch eine zusätzliches teure Baugruppe benötigt.

Aufgabe der vorliegenden Erfindung ist es, ein Lenkrad mit einem Schaltelement für die Auslösung einer elektrischen Funktionskomponente bereitzustellen, das eine zuverlässige Auslösung der Funktionskomponente erlaubt und kostengünstig herzustellen ist.

Diese Aufgabe wird durch ein Lenkrad mit den Merkmalen des Anspruchs 1 gelöst.

Danach weist ein Lenkrad der eingangs genannten Art mit einem elektrischen Schaltelement, welches zwei elektrische Kontaktelemente aufweist und durch eine manuell auslösbare Bewegung eines Lenkradabschnittes betätigbar ist, mindestens ein Kontaktelement mit einem aus einem elektrisch leitfähigen Kunststoff bestehenden Abschnitt auf, durch den der Strom beim Betätigen des Schaltelementes fließt. Dabei bildet dieser aus elektrisch leitfähigem Kunststoff bestehende Abschnitt ein Kontaktprofil aus, dessen Kontur die Kontaktfläche bildet. Auch beide Kontaktflächen können aus dem elektrisch leitfähigen Kunststoff als Kontaktprofil ausgebildet sein. Das Kontaktprofil umgibt einen metallischen Leiter, der z.B. aus einer Metallitze oder einem Kabel besteht.

Die Kontaktfläche des mindestens einen Kontaktelementes besteht also aus einem elektrisch leitfähigen Kunststoff und der Kontakt zwischen den Kontaktelementen wird durch den leitfähigen Kunststoff hergestellt. Der leitfähige Kunststoff kann hierbei aus leitfähigen Polymeren oder Polymermischungen bestehen. Es können aber auch nicht-leitfähige Polymere oder Polymermischungen durch den Zusatz leitfähiger Stoffe, z.B. von Kohlefasern, leitfähig ausgerüstet werden. Die leitfähigen Stoffe liegen hierbei fein verteilt in dem Kunststoff vor, so daß dieser zumindest über einen Abschnitt des Volumens selbst leitfähig ist.

Die Ausbildung des Schaltelements als Kontaktprofil mit einem metallischen Leiter, der von einem leitfähigen Kunststoff umgeben ist, hat den Vorteil, daß eine Endlosfertigung des Schaltelementes möglich ist, was zu einer preisgünstigen Herstellung und Verarbeitung sowie einem einfachen Einbau führt. Durch den elektrisch leitfähigen Kunststoff kann außerdem die äußere Form, d.h. insbesondere der Querschnitt des Kontaktprofiles leicht an spezielle Anforderungen und weitere Funktionen angepaßt werden. So kann das Kontaktprofil zugleich als Dichtprofil für den Kontaktspalt fungieren. Das gesamte Kontaktprofil kann als Kontaktfläche dienen, was die Anpassungsfähigkeit der Anordnung deutlich erhöht.

Aufgrund des durch den leitfähigen Kunststoff veränderten elektrischen Widerstandes des Schaltelementes werden Spannungsspitzen geglättet, und es ist möglich, Ströme einfach und sicher zu schalten, ohne daß es zu ausgeprägten Spannungsspitzen beim Schalten kommt. Durch die entsprechende Auswahl der Leitfähigkeit und der Schichtdicke des Kunststoffes kann das Schaltelement optimal an die jeweilige Anwendung angepaßt werden.

Der bewegbare Lenkradabschnitt wird hierbei bevorzugt durch eine Abdeckung im zentralen Lenkradbereich, besonders bevorzugt durch eine Airbagabdeckung gebildet.

Bevorzugt wird als Kunststoff ein Elastomer verwendet. Die Elastizität von Elastomeren führt zu einer deutlich größeren Kontaktfläche zwischen den Kontakten des Schaltelementes, da sich dieser an die Oberfläche des Gegenkontaktes anpaßt und somit die Schaltsicherheit erhöht. Der Einsatz von Elastomeren verlängert weiterhin die Standzeit des Schaltelementes durch die Verringerung der mechanischen Belastung, da beim Kontaktschluß im Gegensatz zu Metallkontakten keine inelastische Verformung der Kontaktflächen auftritt. Besonders bevorzugt ist es, ein thermoplastisches Elastomer einzusetzen, da hierdurch eine leichte Formgebung möglich ist.

In einer Ausführungsform sind nicht die Polymere des Kunststoffes selbst leitfähig, sondern ein zunächst nicht leitfähiger Kunststoff wird durch Zusatz von leitfähigen Füllstoffen, insbesondere Kohlefasern, leitfähig ausgerüstet. Durch die Auswahl und den Anteil dieser leitfähigen Füllstoffe in dem Kunststoff kann der Widerstand des Kunststoffes variiert werden werden.

In einer vorteilhaften Variante wird das Kontaktprofil durch Extrudieren oder Spritzgießen hergestellt. Diese Art der Herstellung ist besonders kostengünstig und einfach.

Bei einer Ausführungsform sind die beiden Kontaktelemente relativ zueinander beweglich angeordnet. Durch die manuell auslösbare Bewegung des Lenkradabschnittes tritt eine Kontaktfläche des einen Kontaktelementes mit einer Kontaktfläche des anderen Kontaktelementes in unmittelbaren Kontakt und durch den Kontaktschluß wird die entsprechende elektrischen Funktionskomponente ausgelöst.

Eines der Kontaktelemente kann hierbei an einer Lenkradbasis und das andere Kontaktelement an dem manuell bewegbaren Lenkradabschnitt angeordnet sein. Diese Ausführung ermöglicht es, ohne ein zusätzliches Bauelement auszukommen, da durch die Bewegung der Abdeckung der Kontakt und der Gegenkontakt aufeinander gedrückt und direkt kurzgeschlossen werden.

In einer bevorzugten Ausführungsform sind der Kontakt und der Gegenkontakt in einem einzigen Profil angeordnet. Die beiden Kontaktelemente sind dabei an dem aus einem nicht leitfähigen Material bestehenden, elastisch verformbaren Profil derart angeordnet, daß durch Verformung des nicht leitenden Profiles die Kontaktelemente in elektrischen Kontakt treten. Bevorzugt enthält das nicht leitende Profil beide Kontaktelemente, den Kontakt und den Gegenkontakt, die in einem bestimmten Abstand voneinander in einem Material, bevorzugt Kunststoff, geeigneter Flexibilität eingebettet sind. Die Anordnung beider Kontakte in einem Kontaktprofil führt zu einer einfachen und kostengünstigen Herstellung des erfindungsgemäßen Lenkrades.

Andererseits ist es möglich, daß ein relativ zu den Kontaktelementen bewegliches Bauteil vorgesehen ist und daß durch die manuell auslösbare Bewegung des manuell beweglichen Lenkradabschnittes eine Bewegung des Bauteiles verursacht wird, durch die eine Kontaktfläche des einen Kontaktelementes mit einer Kontaktfläche des anderen Kontaktelementes in elektrischen Kontakt tritt. Als Bauelement zur Betätigung des Schaltelementes kann hier z. B. ein an einem Gehäuse der Airbageinheit vorgesehener Vorsprung dienen. Bei dieser Ausführungsform ist die Verwendung von Kontaktprofilen, deren Querschnitt ein Einrasten des Profils an der Abdekkung bzw. dem Lenkrad ermöglicht, besonders bevorzugt.

Hierbei kann das Bauteil elektrisch leitfähig sein, so daß die beiden Kontaktflächen über dieses Bauteil in elektrischen Kontakt treten.

In einer weiteren Ausführungsform wird eines der Kontaktelemente von einem Blechteil gebildet. Dieses Blechteil kann beispielsweise der Boden des Gasgenerators der Airbageinheit oder ein Träger des Gasgenerators oder ein Gehäuse der Airbageinheit sein.

Zum Schutz der Kontaktelemente vor der Einwirkung von Partikeln ist mindestens jeweils ein Abschnitt der Kontaktelemente durch ein Schutzelement aus elastischem Schaum umgeben. Die Verschmutzung der Kontaktflächen insbesondere durch Staub kann hierdurch wirkungsvoll unterbunden und die Schaltsicherheit auch für eine lange Zeit sichergestellt werden.

Durch die Anordnung der Kontakte im Bereich des äußeren Randes der Abdeckung in unmittelbarer Nähe der Abstützungspunkte gegenüber der Lenkradbasis kann der Abstand zwischen Abdeckung und Lenkradbasis reduziert werden, da die Hebelwirkung bei der Auslegung des Kontaktspaltes nicht berücksichtigt werden muß. Ein verringerter Kontaktspalt führt auch zu einer Verringerung des Abstandes zwischen Abdeckung und Lenkradbasis. Die Betätigung des Schaltelementes geschieht bei der Bewegung der Abdeckung durch Einwirkung eines am Rand der Abdeckung angeordneten Betätigungsabschnittes. Das Betätigungselement kann hierbei jedes Mittel sein, das in der Lage ist, die Bewegung der Abdeckung zu übertragen und das Schaltelement auszulösen. Wird das Kontaktelement als Kontaktprofil ausgebildet und im Bereich des Randes der Abdeckung angeordnet, so wird das Schaltelement auch dann sicher ausgelöst, wenn die Abdeckung nicht zentral sondern nur an einer Seite bewegt wird.

Der Kontakt und der Gegenkontakt sind vorzugsweise zumindest teilweise entlang des Umfanges des Randes der Abdekkung in einem Kontaktspalt zwischen der Abdeckung und dem Lenkrad angeordnet.

Weiterhin kann der Querschnitt des Kontaktprofiles zweckmäßigerweise so gewählt werden, daß das Kontaktprofil in die Abdeckung oder das Lenkrad oder in beide einrastbar ist. Dazu kann beispielsweise der elektrisch leitfähige Kunststoff des Kontaktprofiles entlang seiner Längsrichtung mit Nuten oder Vorsprüngen versehen sein.

Zweckmäßig weist das Kontaktprofil z. B. einen halbkreisförmigen Querschnitt auf, mit dem es aufgrund seiner Flexibilität in eine geeignete, im Rand der Abdeckung und bzw. oder in der Lenkradbasis angeordnete Nut eindrückbar ist. Insbesondere die Lenkradbasis umfaßt in dem Bereich, in dem das Kontaktprofil angeordnet ist, häufig eine Schicht aus geschäumtem Kunststoff, in die das Kontaktprofil leicht eingerastet werden kann.

Die erfindungsgemäß verwendeten Kontaktprofile können in einfacher Weise mit handelsüblichen Steckverbindern konfektioniert und angeschlossen werden.

Die axiale Beweglichkeit der Airbagabdeckung relativ zu dem Lenkrad kann in an sich bekannter Weise z. B. durch Aufhängung der Airbageinheit an dem Lenkrad mit vorzugsweise drei oder mehr Federn erreicht werden.

Die Erfindung soll anhand der folgenden Figuren näher erläutert werden. Es zeigt:
- Figur 1:: eine Draufsicht auf einen Teil eines erfindungsgemäßen Lenkrades mit zwei Kontaktprofilen als Schaltelement für die Hornauslösung;
- Figur 2:: einen Schnitt entlang der Linie B-B durch das Lenkrad nach Figur 1;
- Figur 3:: einen Querschnitt eines Profiles aus leitfähigem und nichtleitfähigem Kunststoff;
- Figur 4:: einen Querschnitt eines Kontaktprofiles aus leitfähigem Kunststoff;
- Figur 5:: einen weiteren Querschnitt eines Profiles aus leitfähigem und nichtleitfähigem Kunststoff;
- Figur 6:: eine Detailansicht einer Ausführungsform eines erfindungsgemäßen Lenkrades mit einem Blechteil als Gegenkontakt;
- Figur 7:: eine Draufsicht auf einen Teil eines weiteren erfindungsgemäßen Lenkrades mit einem nichtleitenden elastischen Profil als Schaltelement für die Hornauslösung;
- Figur 8:: einen Schnitt entlang der Linie D-D durch das Lenkrad nach Figur 7;
- Figur 9:: eine Draufsicht auf einen Teil eines weiteren erfindungsgemäßen Lenkrades mit zwei Kontaktprofilen als Schaltelement für die Hornauslösung;
- Figur 10:: einen Schnitt entlang der Linie F-F durch das Lenkrad nach Figur 9.
- Figur 11:: einen Schnitt durch ein weiteres erfindungsgemäßes Lenkrad mit einem Kontaktprofil und einem Kontaktniet als Schaltelement für die Hornauslösung;

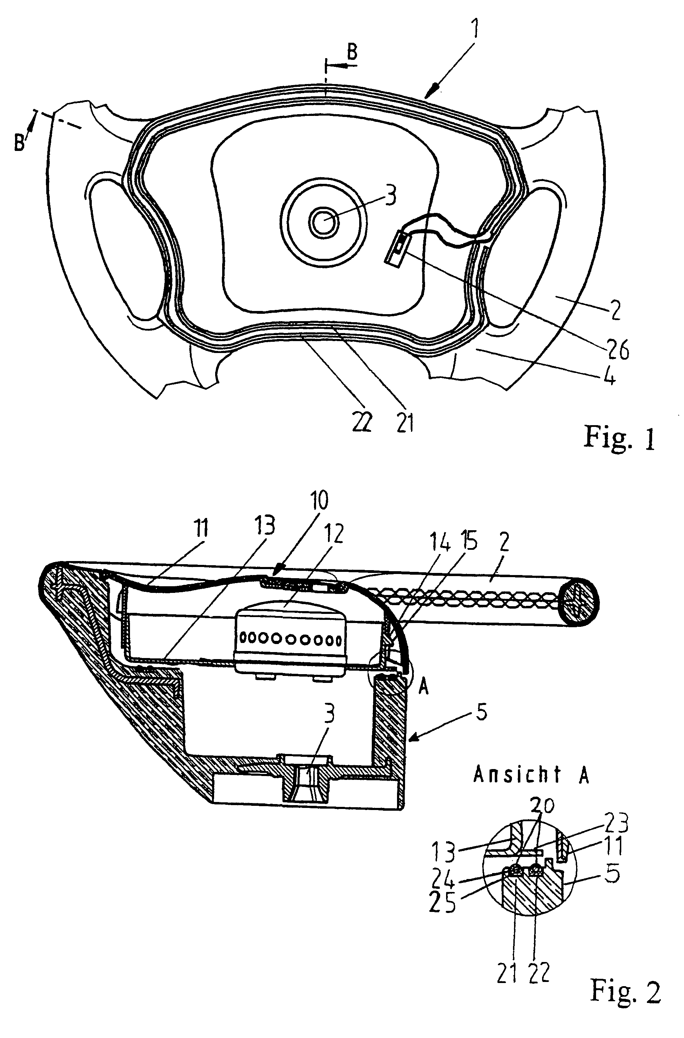

In Figur 1 ist eine Draufsicht auf ein erfindungsgemäßes Lenkrad 1 gezeigt, dessen Lenkradkranz 2 teilweise nicht mit dargestellt ist. Die in dem Lenkrad 1 vorgesehene Airbageinheit 10 ist nicht mit eingezeichnet. In der Mitte befindet sich die Lenkradnabe 3, mit der der Lenkradkranz 2 über vier Speichen 4 verbunden ist.

Weiterhin erkennt man ein aus zwei elektrischen Kontaktelementen in Form eines Kontaktes 21 und eines Gegenkontaktes 22 bestehendes elektrisches Schaltelement 21, 22, das über einen Steckverbinder 26 elektrisch anschließbar ist. In der in Figur 1 gezeigten Ausführungsform sind sowohl der Kontakt 21 als auch der Gegenkontakt 22 in dem Bereich an dem Lenkrad 1 angebracht, in dem sich nach der Montage der Airbageinheit 10 der untere, äußere Rand der Abdeckung 11 befindet.

Die Figur 2 zeigt einen Schnitt entlang der Linie B-B in Figur 1, wobei in Figur 2 die Airbageinheit 10 mit dargestellt ist. Der Maßstab der Figuren stimmt nicht überein. Die Airbageinheit 10 umfaßt eine als beweglicher Lenkradabschnitt fungierende Abdeckung 11, einen nicht dargestellten Gassack und einen Gasgenerator 12, der auf einem Generatorträger 13 befestigt ist. Der Generatorträger 13 und die Abdeckung 11 bilden das Gehäuse der Airbageinheit 10 und sind über Ausnehmungen 14 in der Abdeckung 11 und Rastnasen 15 in dem Generatorträger 13 miteinander verbunden. Die Airbageinheit 10 ist über vier nicht dargestellte Federn beweglich an der Lenkradbasis 5 befestigt. Dadurch kann die Abdeckung 11 in Richtung auf die Lenkradbasis 5 bewegt werden, um das Hornsignal auszulösen.

Die Funktion des erfindungsgemäßen Schaltelementes läßt sich am besten aus der Detailvergrößerung in Figur 2 ersehen. Im Bereich der Abdeckung 11 der Airbageinheit 10 ist an dem unteren äußeren Rand des Generatorträgers 13 ein leitfähiges Teil 23 als Bauelement zur Betätigung des Schaltelementes bei der Bewegung der Abdeckung 11 vorgesehen. Wie oben beschrieben, sind der Kontakt 21 und der Gegenkontakt 22 an der Lenkradbasis 5 angebracht. Sowohl der Kontakt 21 als auch der Gegenkontakt 22 werden von einem Kontaktprofil 25 aus leitfähigen Kunststoff gebildet, in das eine Kupferlitze 24 gebettet ist, um den Widerstand zu verringern. Bei der Betätigung der Abdeckung 11 wird die gesamte Airbageinheit 10 in Richtung auf das Lenkrad 1 bewegt. Das leitfähige Teil 23 wird auf die Kontakte 21, 22 gedrückt und schließt diese kurz. Damit wird das Hornsignal ausgelöst.

Als Kunststoffe eignen sich hierbei insbesondere Elastomere, durch deren Elastizität beim Auslösen des Schaltelementes die Kontaktfläche zwischen den Kontakten 21, 22 deutlich verbessert wird, was wiederum zur Verbesserung der Schalteigenschaften beiträgt. Die Elastizität des Kunststoffs führt zusätzlich zu einer deutlich geringeren Abnutzung der Kontakte 21, 22 und damit zu einer längeren Standzeit des Schaltelementes sowie zu geringeren Kontaktanschlaggeräuschen. Bevorzugte Elastomere sind hierbei EPDM oder thermoplastische Elastomere (TPE), besonders bevorzugt thermoplastische Polyester-Elastomere.

Um die Kunststoffe leitfähig zu machen, werden leitfähige Füllstoffe wie z.B. Kohlefasern, Graphitstaub oder Metallteilchen zugesetzt. Der Anteil kann hierbei in weiten Grenzen variiert und auf die jeweilige Anwendung speziell angepaßt werden. Der Zusatz von Kohlefasern mit einem Anteil von 20 bis 40% ist besonders bevorzugt.

Da das Schaltelement sich entlang des gesamten Umfanges der Abdeckung 11 erstreckt, wird auch bei einer nicht ganz sauber axialen Betätigung der Abdeckung 11 das leitfähige Teil 23 mindestens in einem Teilbereich auf die Kontakte 21, 22 gedrückt und so das Hornsignal sicher ausgelöst.

In Figur 4 ist eine bevorzugte Ausgestaltung für den Kontakt 21 und/oder den Gegenkontakt 22 dargestellt. Dieser umfaßt wiederum eine Metallitze 24 als Elektrode, die von einem leitfähigen Kunststoffprofil 25 umgeben ist. Mittig auf einem halbkreisförmigen unteren Teil ist noch ein in etwa rechteckiger Fortsatz vorgesehen, dessen Stirnfläche die Kontaktfläche 20 bildet. Diese Ausbildung des Kontaktprofiles 25 ist besonders günstig, da sie zum einen durch Extrusion oder Spritzguß in entsprechenden Formen leicht und kostengünstig herstellbar ist. Zum anderen ist auch eine einfache Anbringung an der Lenkradbasis 5 bzw. der Abdeckung 11 oder auch dem Generatorträger 13 oder einem anderen Gehäuseteil der Airbageinheit 10 möglich, indem das Profil in eine geeignete Nut eingerastet wird. Dazu kann entweder der leitfähige Kunststoff oder das Material, in welchem die Nut vorgesehen ist, oder beide entsprechend elastisch sein.

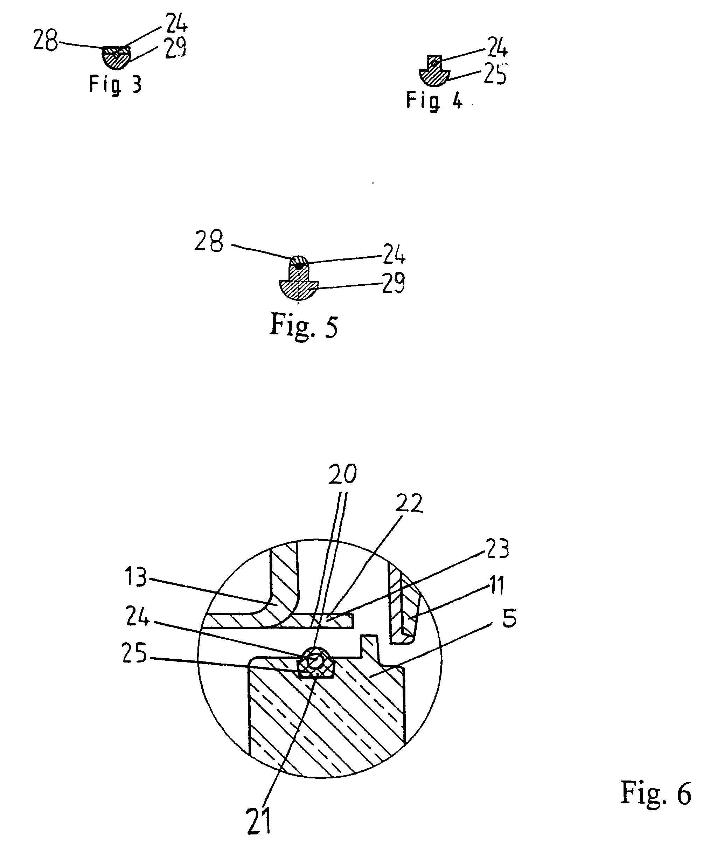

In den Figuren 3 und 5 sind weitere Ausgestaltungen eines Kontaktes 21 und/oder Gegenkontaktes 22 gezeigt. Im Unterschied zu dem in Figur 4 gezeigten Kontaktelement 21 besteht dieses aus einem Profil mit einem leitfähigen Profilteil 28 und einem nichtleitfähigen Profilteil 29. Die in dem Profil eingebettete Metallitze 24 steht in Kontakt mit dem leitfähigen Profilteil 28. Der nichtleitfähige elastische Kunststoff ist so profiliert, daß die Befestigung an der Lenkradbasis 5 bzw. der Abdeckung 11 ermöglicht wird. Der nichtleitfähige Teil 29 des Profils in Figur 3 weist einen im wesentlichen halbkreisförmigen Querschnitt auf und steht in Verbindung mit dem leitfähigen Profilteil 28. Der Profilquerschnitt des in Figur 5 gezeigten Kontaktelementes 21 entspricht dem des in Figur 4 dargestellten. Besonders günstig ist es hierbei, sowohl für den leitfähigen Profilteil 28 als auch den nichtleitfähigen Profilteil 29 das gleiche Polymer bzw. die gleiche Polymermischung zu verwenden und das leitfähige Profilteil (28) durch Zusatz von Kohlefasern leitfähig auszurüsten.

Die Figur 6 zeigt eine Detailansicht entsprechend der Ansicht A in Figur 2, wobei der Kontakt 21 von einem Kontaktprofil 25 und der Gegenkontakt 22 von einem Blechteil 23 in Verbindung mit dem Generatorträger 13 gebildet wird. Auch bei dieser besonders kostengünstigen Ausführungsform kann der Kontaktspalt zwischen Abdeckung 11 und Lenkradbasis 5 sehr klein gehalten werden. Die Anordnung des Kontaktprofiles 25 im Bereich des Randes der Abdeckung 11 ermöglicht dies.

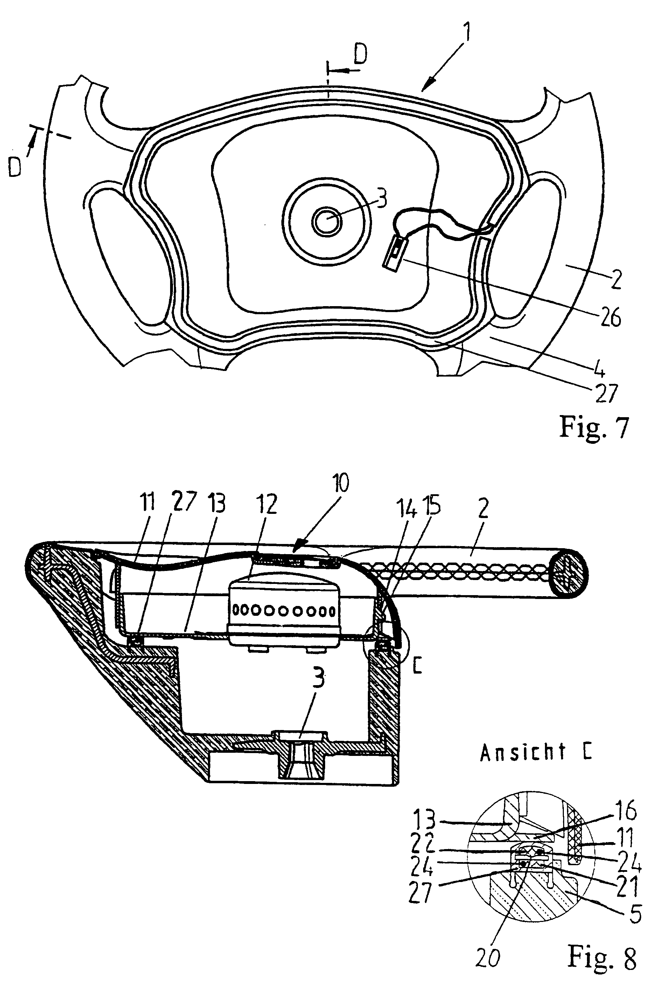

Die in den Figuren 7 und 8 gezeigte Ausführungsform eines erfindungsgemäßen Lenkrades 1 weist ein elastisches Profil 27 aus nichtleitenden Kunststoff auf, welches sowohl den Kontakt 21 als auch den Gegenkontakt 22 enthält. Ansonsten entspricht der Aufbau dem in Figur 1 und 2 gezeigten und soll nicht nochmals erläutert werden. Wie aus der Draufsicht auf das Lenkrad 1 ohne Airbageinheit 10 in Figur 5 ersichtlich ist, sind Kontakt 21 und Gegenkontakt 22 gemeinsam in einem elastischen Profil 27 enthalten und wiederum mit einem Steckverbinder 26 angeschlossen.

Die Figur 8 zeigt einen Schnitt durch das Lenkrad 1 entlang der Linie D-D in Figur 7, jedoch mit der Airbageinheit 10. Das elastische Profil 27 ist auch bei dieser Ausführungsform an der Lenkradbasis 5 befestigt. Als Bauelement zum Auslösen des Hornsignals ist ein Vorsprung 16 an dem Generatorträger 13 vorgesehen. Im Gegensatz zu dem leitfähigen Teil 23 bei der Ausführungsform nach Figuren 1 und 2 kommt es hier aber auf eine Leitfähigkeit nicht an. Der Kontakt 21 wird durch Zusammendrücken des Profils 27 mit dem Gegenkontakt 22 kurzgeschlossen.

Man erkennt in der Detailansicht in Figur 8, daß sich der eigentliche "Kontaktspalt" zwischen den Kontaktflächen 20 innerhalb des elastischen Profils 27 befindet. In dem äußeren elastischen und elektrisch isolierenden Profil 27 befindet sich das Kontaktelement 21, in das wiederum ein metallischer Leiter 24 eingebettet ist. Bei der Bewegung der Abdeckung 11 wird das Profil 27 zusammengedrückt und der Spalt zwischen dem Kontakt 21 und dem Gegenkontakt 22 wird geschlossen. Damit stehen die metallischen Leiter 24 über den leitfähigen Kunststoff in Kontakt und das Hornsignal wird ausgelöst.

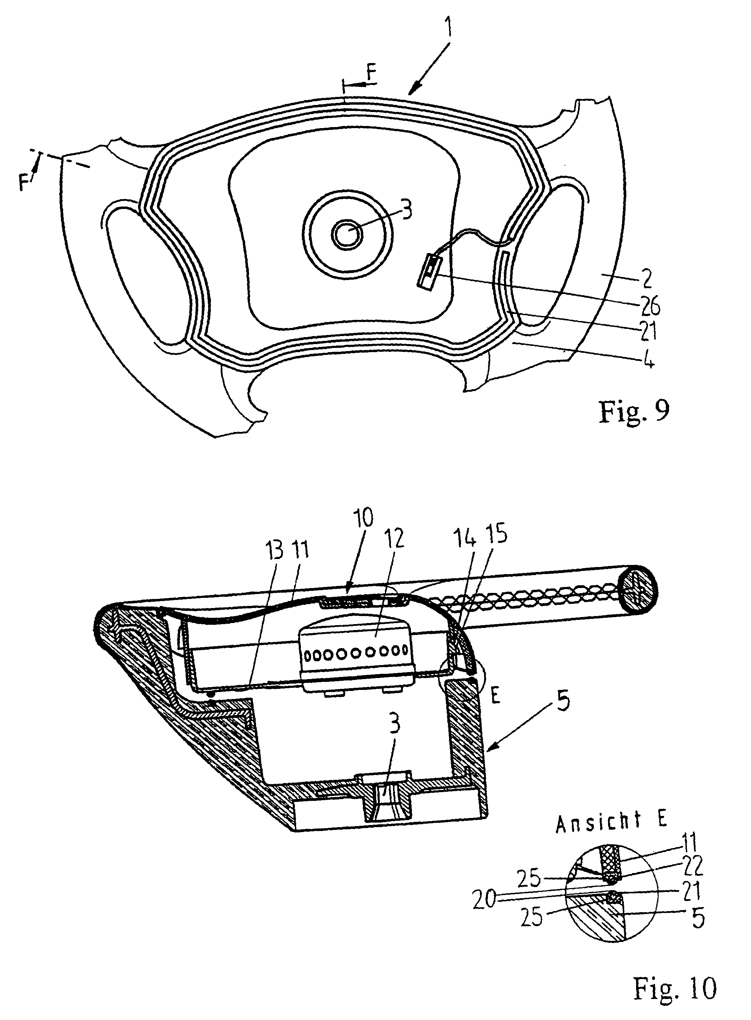

In den Figuren 9 und 10 ist eine dritte Ausführungsform eines erfindungsgemäßen Lenkrades 1 gezeigt. In dieser Ausführungsform ist der Kontakt 21 als Kontaktprofil 25 an der Lenkradbasis 5 und der Gegenkontakt 22 als Kontaktprofil 25 an der Abdeckung 11 vorgesehen. Entsprechend ist in Figur 9 auch nur der Kontakt 21 an den Steckverbinder 26 angeschlossen.

In dem in Figur 10 gezeigten Schnitt entlang der Linie F-F und insbesondere in der Detailvergrößerung ist erkennbar, daß bei dieser Ausführungsform weder ein leitfähiges Teil 23 noch ein Vorsprung 16 erforderlich sind. Die Hornauslösung erfolgt vielmehr durch eine direkte Kontaktierung der Kontaktelemente 21, 22 bei der axialen Bewegung der Abdeckung 11.

In diesem Fall ist es auch möglich, die Ausnehmungen 14 in der Abdeckung 11, die der Verbindung von Abdeckung 11 und Generatorträger 13 dienen, so auszubilden, daß die Abdekkung 11 relativ zu dem Rest der Airbageinheit 10 beweglich ist. Zur Betätigung des Schaltelementes ist so eine separate Bewegung der Abdeckung 11 möglich. Damit bieten sich weitere Gestaltungsmöglichkeiten für ein erfindungsgemäßes Lenkrad 1. So kann z. B. zur Verbesserung des Insassenschutzes die Verbindung der Airbageinheit 10 mit dem Lenkrad 1 deformierbar gestaltet werden.

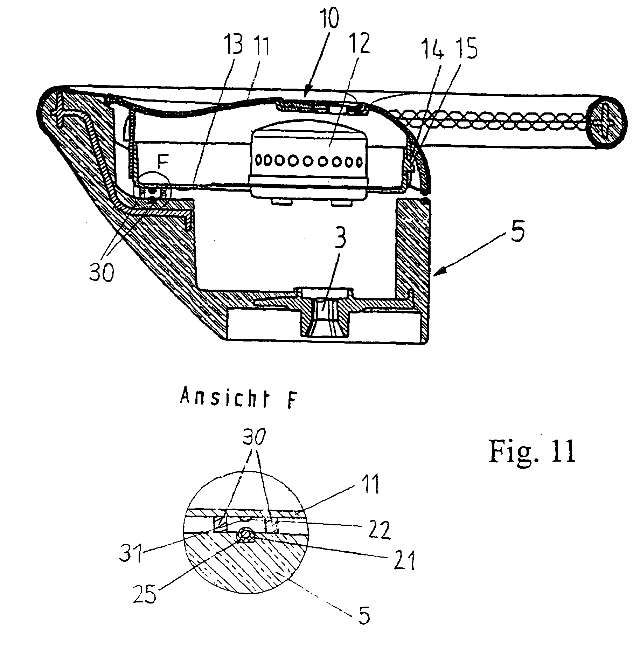

In Figur 11 ist eine Alternative zu der in Figuren 10 dargestellten Ausführungsform abgebildet. Im Unterschied zu Figur 10 ist das eine Kontaktelement, in diesem Fall der Gegenkontakt 22 nicht als Kontaktprofil ausgebildet, sondern liegt in Form von metallischen Kontaktnieten 31 vor.

Zum Schutz vor äußeren Verunreinigungen, insbesondere Staub, ist zwischen der Lenkradbasis 5 und der Abdeckung 11 und um den Kontaktniet 31 herum ein ringförmiger elastischer Schaumkörper 30 als Schutzelement angeordnet. Die Elastizität des Schaumkörpers 30 ist ausreichend hoch, daß sich dieser an das an der Lenkradbasis 5 angeordnete Kontaktprofil 25 anschmiegt und so den Kontaktniet 31 nach außen staubdicht abschließt. Der Schaumkörper besteht aus offenporigem Schaum, so daß ein genügender Feuchtigkeitsaustausch gewährleistet ist und eine Anreicherung von kondensiertem Wasser wirkungsvoll vermieden wird.

Selbstverständlich eignet sich das beschriebene Schaltelement nicht nur für die Hornauslösung sondern kann auch für andere, elektrisch betätigbare Einrichtungen verwendet werden. So ist es denkbar, z. B. auch die Lichthupe über eine axiale Betätigung der Airbagabdeckung zu schalten. Beispielsweise könnte die Hornauslösung durch axiale Betätigung der Abdeckung auf der einen Seite und die Lichthupenauslösung durch axiale Betätigung auf der gegenüberliegenden Seite der Abdeckung erfolgen.

## Patentansprüche

1. Lenkrad mit einem elektrischen Schaltelement, insbesondere für die Hornauslösung, das zwei elektrische Kontaktelemente (21, 22) aufweist und das durch eine manuell auslösbare Bewegung eines Lenkradabschnittes (11) derart betätigbar ist, daß eine Kontaktfläche (20) des einen Kontaktelementes (21) mit einer Kontaktfläche (20) des anderen Kontaktelementes (22) in elektrischen Kontakt gebracht wird und ein elektrischer Strom durch das Schaltelement fließen kann, wobei mindestens ein Kontaktelement (21, 22) einen aus einem elektrisch leitfähigen Kunststoff bestehenden Abschnitt aufweist, durch den der Strom nach dem Betätigen des Schaltelementes fließt,
**dadurch gekennzeichnet,**
**daß** mindestens ein Kontaktelement (21, 22) ein Kontaktprofil (25) aus einem elektrisch leitfähigen Kunststoff aufweist, dessen Kontur die Kontaktfläche (20) bildet, und daß ein metallischer Leiter (24) von dem Kontaktprofil (25) umgeben ist.

2. Lenkrad nach Anspruch 1, **dadurch gekennzeichnet, daß** der Kunststoff ein Elastomer ist.

3. Lenkrad nach Anspruch 2, **dadurch gekennzeichnet, daß** das Elastomer ein thermoplastisches Elastomer ist.

4. Lenkrad nach einem der Ansprüche 1 bis 3, **dadurch gekennzeichnet, daß** der Kunststoff durch Zusatz leitfähiger Füllstoffe, insbesondere von Kohlefasern, leitfähig ausgerüstet ist.

5. Lenkrad nach einem der vorhergehenden Ansprüche, **dadurch gekennzeichnet, daß** für die Kontaktelemente (21, 22) jeweils ein Kontaktprofil (25) vorgesehen ist.

6. Lenkrad nach einem der vorangehenden Ansprüche, **dadurch gekennzeichnet, daß** das Kontaktprofil (25) durch Extrudieren oder Spritzgießen hergestellt ist.

7. Lenkrad nach einem der vorhergehenden Ansprüche, **dadurch gekennzeichnet, daß** die beiden Kontaktelemente (21, 22) relativ zueinander beweglich angeordnet sind und daß durch die manuell auslösbare Bewegung des Lenkradabschnittes (11) eine Kontaktfläche (20) des einen Kontaktelementes (21) mit einer Kontaktfläche (20) des anderen Kontaktelementes (22) in unmittelbaren Kontakt tritt.

8. Lenkrad nach einem der vorangehenden Ansprüche, **dadurch gekennzeichnet, daß** eines der Kontaktelemente (21) an einer Lenkradbasis (5) und das andere Kontaktelement (22) an dem Lenkradabschnitt (11) angeordnet ist.

9. Lenkrad nach einem der Ansprüche 1 bis 6, **dadurch gekennzeichnet, daß** die beiden Kontaktelemente (21, 22) an einem aus einem nicht leitfähigen Material bestehenden, elastisch verformbaren Profil (27) derart angeordnet sind, daß durch Verformung des nicht leitenden Profiles (27) die Kontaktelemente (21, 22) in elektrischen Kontakt treten.

10. Lenkrad nach einem der vorangehenden Ansprüche, **dadurch gekennzeichnet, daß** ein relativ zu den Kontaktelementen (21, 22) bewegliches Bauteil (16, 23) vorgesehen ist und daß durch die manuell auslösbare Bewegung des Lenkradabschnittes (11) eine Bewegung des Bauteiles (16, 23) verursacht wird, durch die eine Kontaktfläche (20) des einen Kontaktelementes (21) mit einer Kontaktfläche (20) des anderen Kontaktelementes (22) in elektrischen Kontakt gebracht wird.

11. Lenkrad nach Anspruch 10, **dadurch gekennzeichnet, daß** das Bauteil (23) elektrisch leitfähig ist und daß die beiden Kontaktflächen (20) über dieses Bauteil (23) in elektrischen Kontakt treten.

12. Lenkrad nach einem der vorangehenden Ansprüche, **dadurch gekennzeichnet, daß** eines Kontaktelemente (21, 22) von einem Blechteil gebildet wird.

13. Lenkrad nach einem der vorangehenden Ansprüche, **dadurch gekennzeichnet, daß** mindetens jeweils ein Abschnitt der Kontaktelemente (21, 22) durch ein Schutzelement (30) aus elastischem Schaum vor der Einwirkung von Partikeln, insbesondere Staub, geschützt ist.

14. Lenkrad nach einem der vorhergehenden Ansprüche, **dadurch gekennzeichnet, daß** der bewegbare Lenkradabschnitt (11) durch eine Abdeckung im zentralen Lenkradbereich gebildet wird.

15. Lenkrad nach Anspruch 14, **dadurch gekennzeichnet, daß** das Schaltelement (21, 22) derart im Bereich eines äußeren Randes der Abdeckung (11) angeordnet ist, daß das Schaltelement (21, 22) bei der Bewegung der Abdeckung (11) durch Einwirkung eines am Rand der Abdeckung angeordneten Betätigungsabschnittes (16, 23) betätigt wird.

16. Lenkrad nach Anspruch 14 oder 15, **dadurch gekennzeichnet, daß** sich die Kontaktelemente (21, 22) zumindest teilweise entlang des Umfanges des Randes der Abdekkung (11) in einem Kontaktspalt zwischen der Abdekkung (11) und einer Lenkradbasis (5) erstrecken.

17. Lenkrad nach Anspruch 15 oder 16, **dadurch gekennzeichnet, daß** die Kontaktelemente (21, 22) relativ zueinander beweglich sind, so daß eines der Kontaktelemente (21, 22) das bewegliche Bauelement im Bereich des Randes der Abdeckung (11) bildet.

18. Lenkrad nach einem der vorangehenden Ansprüche, **dadurch gekennzeichnet, daß** das Kontaktprofil (25) einen solchen Querschnitt aufweist, daß es in einer Nut festlegbar und so an der Lenkradbasis (5) oder der Abdekkung (11) befestigbar ist.

19. Lenkrad nach einem der vorangehenden Ansprüche, **dadurch gekennzeichnet, daß** das Lenkrad eine Airbageinheit aufweist, wobei die Abdeckung (11) die Abdeckung der Airbageinheit ist.

## Claims

1. Steering wheel with an electrical switching element, especially for sounding the horn, which has two electrical contact elements (21, 22) and which can be operated by manually moving a section of the steering wheel (11) in such a way that a contact surface (20) of one contact element (21) is brought into electrical contact with a contact surface (20) of the other contact element (22) and an electrical current can flow through the switching element, at least one contact element (21, 22) having a section composed of an electrically conductive synthetic material, through which the current flows after operation of the switching element,
**characterized in that**
at least one contact element (21, 22) has a contact profile (25) composed of an electrically conductive synthetic material, the contour, of which forms the contact surface (20), and **in that** a metal conductor (24) is surrounded by the contact profile (25).

2. Steering wheel according to Claim 1, **characterized in that** the synthetic material is an elastomer.

3. Steering wheel according to Claim 2, **characterized in that** the elastomer is a thermoplastic elastomer.

4. Steering wheel according to one of Claims 1 to 3, **characterized in that** the synthetic material is rendered conductive through the addition of conductive fillers, especially carbon fibers.

5. Steering wheel according to one of the preceding claims, **characterized in that** a contact profile (25) is provided for each of the contact elements (21, 22).

6. Steering wheel according to one of the preceding claims, **characterized in that** the contact profile (25) is manufactured by extrusion or injection moulding.

7. Steering wheel according to one of the preceding claims, **characterized in that** the two contact elements (21, 22) are arranged so that they are movable in relation to one another and that by manually moving the steering wheel section (11) a contact surface (20) of one contact element (21) comes into direct contact with a contact surface (20) of the other contact element (22).

8. Steering wheel according to one of the preceding claims, **characterized in that** one of the contact elements (21) is arranged on a steering wheel base (5) and the other contact element (22) on the steering wheel section (11).

9. Steering wheel according to one of Claims 1 to 6, **characterized in that** the two contact elements (21, 22) are arranged on an elastically deformable profile (27), composed of a non-conductive material, in such a way that the contact elements (21, 22) come into electrical contact through deformation of the non-conductive profile (27).

10. Steering wheel according to one of the preceding claims, **characterized in that** a component (16, 23), movable in relation to the contact elements (21, 22), is provided and that manual movement of the steering wheel section (11) causes a movement of the component (16, 23), by means of which one contact surface (20) of one contact element (21) is brought into electrical contact with a contact surface (20) of the other contact element (22).

11. Steering wheel according to Claim 10, **characterized in that** the component (23) is electrically conductive and **in that** the two contact surfaces (20) come into electrical contact by way of said component (23).

12. Steering wheel according to one of the preceding claims, **characterized in that** one of the contact elements (21, 22) is formed by a sheet metal part.

13. Steering wheel according to one of the preceding claims, **characterized in that** at least one section of each of the contact elements (21, 22) is protected by a protective element (30) of elastic foam against the effect of particles, especially dust.

14. Steering wheel according to one of the preceding claims, **characterized in that** the movable steering wheel section (11) is formed by a cover in the central steering wheel area.

15. Steering wheel according to Claim 14, **characterized in that** the switching element (21, 22) is arranged in the area of an outer edge of the cover (11) in such a way that the switching element (21, 22) is operated by the influence of an operating section (16, 23) arranged at the edge of the cover, when the cover (11) is moved.

16. Steering wheel according to Claim 14 or 15, **characterized in that** the contact elements (21, 22) extend at least partially along the periphery of the edge of the cover (11) in a contact gap between the cover (11) and a steering wheel base (5).

17. Steering wheel according to Claim 15 or 16, **characterized in that** the contact elements (21, 22) are movable in relation to one another, so that one of the contact elements (21, 22) forms the movable component in the area of the edge of the cover (11).

18. Steering wheel according to one of the preceding claims, **characterized in that** the contact profile (25) has a cross section such that it can be fitted in a groove and can thus be fixed to the steering wheel base (5) or to the cover (11).

19. Steering wheel according to one of the preceding claims, **characterized in that** the steering wheel has an airbag unit, the cover (11) being the cover for the airbag unit.

## Revendications

1. Volant de direction doté d'un commutateur électrique, en particulier pour l'actionnement d'un klaxon, qui présente deux éléments de contact électrique (21, 22) et qui, par un mouvement déclenchable manuellement, d'une section du volant (11) est actionnable de telle manière qu'une surface de contact (20) de l'un des éléments de contact (21) est mis en contact électrique avec une surface de contact (20) de l'autre élément de contact (22) et qu'un courant électrique puisse circuler à travers le commutateur, dans lequel au moins un élément de contact (21, 22) présente une section composée d'un matériau plastique conducteur électrique, au travers de laquelle le courant circule après actionnement du commutateur,
**caractérisé en ce qu'** au moins un élément de contact (21, 22) présente un profil de contact (25) en un matériau plastique conducteur électrique, dont le contour forme la surface de contact (20), et **en ce qu'**un conducteur métallique (24) est entouré du profil de contact (25).

2. Volant selon la revendication 1, **caractérisé en ce que** le matériau plastique est un élastomère.

3. Volant selon la revendication 2, **caractérisé en ce que** l'élastomère est un élastomère thermoplastique.

4. Volant selon l'une des revendications 1 à 3, **caractérisé en ce que** le matériau plastique est doté de propriété de conductibilité par l'ajout de matériau de remplissage conducteur, en particulier de fibres de carbone.

5. Volant selon l'une des revendications précédentes, **caractérisé en ce que** pour chaque élément de contact (21, 22) un profil de contact (25) est prévu.

6. Volant selon l'une des revendications précédentes, **caractérisé en ce que** le profil de contact (25) est réalisé par extrusion ou par moulage par injection.

7. Volant selon l'une des revendications précédentes, **caractérisé en ce que** les deux éléments de contact (21, 22) sont disposés mobiles l'un par rapport à l'autre et que, par le mouvement déclenchable manuellement, de la section de volant (11), une surface de contact (20) de l'un des éléments de contact (21) entre en contact direct avec une surface de contact (20) de l'autre élément de contact (22).

8. Volant selon l'une des revendications précédentes, **caractérisé en ce que** l'un des éléments de contact (21) est disposé sur une base du volant (5) et l'autre élément de contact (22) est disposé sur la section du volant (11).

9. Volant selon l'une des revendications 1 à 6 **caractérisé en ce que** les deux éléments de contact (21, 22) sont disposés sur un profil élastiquement déformable (27), constitué d'un matériau non conducteur de sorte que par la déformation du profil non conducteur (27), les éléments de contacts (21, 22) entrent en contact électrique.

10. Volant selon l'une des revendications précédentes, **caractérisé en ce qu'**un composant (16, 23) mobile par rapport aux éléments de contact (21, 22) est prévu et que, par le mouvement déclenchable manuellement, de la section de volant (11) un mouvement du composant (16, 23) est provoqué, par lequel une surface de contact (20) de l'un des éléments de contact (21) est mise en contact électrique avec une surface de contact (20) de l'autre élément de contact (22).

11. Volant selon la revendication 10, **caractérisé en ce que** le composant (23) est conducteur électrique et que les deux surfaces de contact (20) entrent en contact électrique au travers de ce composant (23).

12. Volant selon l'une des revendications précédentes, **caractérisé en ce qu'**un élément de contact (21, 22) est formé d'un morceau de tôle.

13. Volant selon l'une des revendications précédentes, **caractérisé en ce qu'**au moins une section de chaque élément de contact (21, 22) est protégée contre l'action de particules, en particulier de poussière, au moyen d'un élément de protection (30) en mousse élastique.

14. Volant selon l'une des revendications précédentes, **caractérisé en ce que** la section mobile de volant (11) est formée par un cache dans la partie centrale du volant.

15. Volant selon la revendication 14, **caractérisé en ce que,** le commutateur (21, 22) est disposé de telle sorte dans la zone d'un bord externe du cache (11), que lors du mouvement du cache (11), le commutateur (21, 22) est commandé par l'action d'une section de commande (16, 23) disposée au bord du cache.

16. Volant selon la revendication 14 ou 15, **caractérisé en ce que** les éléments de contact (21, 22) s'étendent au moins partiellement le long de la circonférence du bord du cache (11) dans une fente de contact entre le cache (11) et une base du volant (5).

17. Volant selon la revendication 15 ou 16, **caractérisé en ce que**, les éléments de contact (21, 22) sont mobiles l'un par rapport à l'autre, de sorte que l'un des éléments de contact (21, 22) forme l'élément mobile dans la zone du bord du cache (11).

18. Volant selon l'une des revendications précédentes, **caractérisé en ce que** le profil de contact (25) présente une section transversale telle qu'il peut être immobilisé dans une rainure et aussi fixé à la base du volant (5) ou au cache (11).

19. Volant selon l'une des revendications précédentes, **caractérisé en ce que** le volant présente une unité d'airbag, dans lequel le cache (11) est le cache de l'airbag.
